# EUROPÄISCHE PATENTSCHRIFT

(11) **EP 0 583 269 B1**
(45) Veröffentlichungstag und Bekanntmachung des Hinweises auf die Patenterteilung: **12.04.1995**
(21) Anmeldenummer: 92908759.1
(22) Anmeldetag: 08.05.1992
(51) Int. Cl.: F16H 25/22

(54) **ROLLENGEWINDETRIEB**
SCREW ROLL DRIVE
ENTRAINEMENT A FILETAGE ET ROULEAUX

(30) Priorität: 10.05.1991 DE 9105795 U
(43) Veröffentlichungstag der Anmeldung: 23.02.1994
(73) Patentinhaber: INA Wälzlager Schaeffler KG, 91063 Herzogenaurach (DE)
(72) Erfinder: OETJEN, Jürgen, D-8522 Herzogenaurach (DE)
(86) Internationale Anmeldenummer: EP9201011
(87) Internationale Veröffentlichungsnummer: WO9220941

(56) Entgegenhaltungen:
- EP-A- 0 049 788
- DE-A- 2 241 206
- GB-A- 2 014 270

## Beschreibung

Die Erfindung betrifft einen Rollengewindetrieb nach Gattung der Schrift EP-A-0 049788 mit einer auf ihrer Außenfläche mit Gewinde versehenen Gewindespindel und einem Mutternkörper, der eine Gewindebohrung aufweist, deren Gewinde gleichgerichtet zum und mit gleicher Steigung wie das Gewinde der Gewindespindel verläuft, aber im Durchmesser größer bemessen ist und mit mehreren umfangsverteilt zwischen der Gewindespindel und dem Mutternkörper angeordneten Gewinderollen, deren Gewinde sowohl mit dem der Gewindespindel als auch dem der Muttern in Eingriff ist und wobei die Gewinderollen einander gegenüber auf Umfangsabstand synchronisiert rotierend, aber axial fest gegenüber dem Mutternkörper gehalten sind.

Bei einer solchen Ausführungsform ist die Verbindung notgedrungen mit Spiel behaftet. Aus diesem Grunde wurde bisher auch ein maßliches Sortieren und eine entsprechende Zuordnung der Gewindeteile vorgenommen, um die gewünschte Muttervorspannung zu erreichen.

Der Erfindung liegt demgegenüber die Aufgabe zugrunde, einen Rollengewindetrieb vorzuschlagen, der spieleinstellbar ist.

Zur Lösung dieser Aufgabe ist erfindungsgemäß vorgesehen, daß der Mutternkörper über die Länge der Gewindebohrung entlang wenigstens einer Linie, welche die Achse der Gewindebohrung schneidet, in seinem Wandungsquerschnitt bis auf einen Steg geschwächt oder geschlitzt ist und daß eine auf den Mutternkörper im Sinne der Durchmesserreduzierung der Gewindebohrung einwirkende Spannvorrichtung vorhanden ist.

Von Vorteil bei einer solchen Ausbildung ist, daß eine große Spielgenauigkeit durch Nachstellung erzielt werden kann. Ferner kann bei der Verwendung zu meßtechnischen Zwecken eine wesentliche Reduzierung der Reibung der Mutter zu kleinsten Reibmomenten erreicht werden. Die Herstellungstoleranzen können damit erweitert werden. Es stellen sich keine negativen Verhältnisse beim Überrollen des Spaltes durch die Gewinderollen ein. Der schrägverlaufende Schlitz sorgt dafür, daß stets ein Teil der Gewindelänge vor und hinter der Unterbrechung in Eingriff ist. Darüber hinaus ist eine erhebliche Vorspannung für die zur Spaltveränderung vorgesehenen Spannschrauben erforderlich. Dies resultiert daraus, daß der Rollengewindetrieb ein relativ steifes Gebilde ist. Damit ist auch der Vorteil verbunden, daß die Verbindung sich nicht setzt, so daß die Spielverhältnisse über eine lange Lebensdauer in der eingestellten Weise erhalten bleiben.

In weiterer Ausgestaltung der Erfindung ist vorgesehen, daß zur Querschnittsschwächung eine Ausnehmung vorhanden ist, die von der Außenfläche des Mutternkörpers ausgeht und bis an den benachbart zur Wandung der Gewindebohrung angeordneten Steg heranreicht.

Eine solche Ausführungsform hat den Vorteil, daß keine Unterbrechung des Gewindeganges in der Gewindebohrung des Mutternkörpers vorhanden ist. Es hat sich herausgestellt, daß die Verformungen, die aufgrund der Verspannung erzielt werden, so gering sind, daß keine negativen Einflüsse auf das Abrollverhalten der Gewinderollen in der Gewindebohrung eintreten. Die für das Einstellen der Spielverhältnisse erforderliche Durchmesserveränderung ist äußerst gering. Sie liegt im Bereich von ca. 0,003 mm.

Alternativ ist es möglich, den Steg auch im Bereich zwischen der Bohrungswandung der Gewindebohrung des Mutternkörpers und der Außenfläche anzuordnen. Im Extremfall kann eine Anordnung im Bereich zur Außenfläche des Mutternkörpers hin vorgesehen sein. In diesem Fall geht die Ausnehmung von der Bohrungswandung der Gewindebohrung des Mutternkörpers aus. Für den Fall, daß der Steg im Zwischenbereich angeordnet ist, ist beidseitig, das heißt, ausgehend sowohl von der Gewindebohrung als auch von der Außenfläche des Mutternkörpers, jeweils eine Ausnehmung vorgesehen.

Ein weiterer Vorteil bei einer Ausbildung mit einem Steg besteht darin, daß die Einheit nach außen hin abgedichtet bleibt. Auf diese Weise wird verhindert, daß von außen Schmutz eindringen und Schmiermittel austreten kann. Zusätzliche Dichtungen in diesem Bereich sind daher nicht erforderlich. Es wäre auch kaum möglich, Dichtungen dort anzuordnen.

Nach einer Ausführungsform ist es möglich, die Spannvorrichtung als geschlitzten Spannring zu gestalten, in dessen Bohrung der Mutternkörper mit seiner zylindrischen Außenfläche aufgenommen wird. Der Spannring ist mit einer oder mehreren Spannschrauben versehen, die quer zum Verlauf seines Schlitzes angeordnet sind.

Alternativ ist es möglich, daß die Spannvorrichtung Bestandteil des Mutternkörpers ist und der Mutternkörper in seinen an die Ausnehmung bzw. den Schlitz beidseitig angrenzenden Abschnitten mit einer Gewindebohrung und einer Widerlagerfläche für eine Spannschraube versehen ist.

Bei einer solchen Ausbildung ist die Einteiligkeit von Vorteil. Hierdurch wird auch eine kompakte, steifere und leichtere Ausführung erzielt.

Zwei bevorzugte Ausführungsbeispiele sind anhand der Zeichnung, die diese schematisch zeigt, näher erläutert.

Es zeigt:
- Fig. 1: einen Längsschnitt durch einen Rollengewindetrieb mit separatem Spannring,
- Fig. 2: einen Querschnitt gemäß Schnittlinie A-A von Figur 1,
- Fig. 3: eine Draufsicht auf einen Mutternkörper gemäß der Ausführung nach den Figuren 1 und 2,
- Fig. 4: einen Horizontalschnitt durch einen Rollengewindetrieb, bei dem der Mutternkörper die Spannvorrichtung aufweist, entlang der Schnittlinie B-B von Figur 5,
- Fig. 5: eine Vorderansicht zu Figur 4, teilweise aufgebrochen und
- Fig. 6: eine Seitenansicht entsprechend Pfeil X in Figur 5.

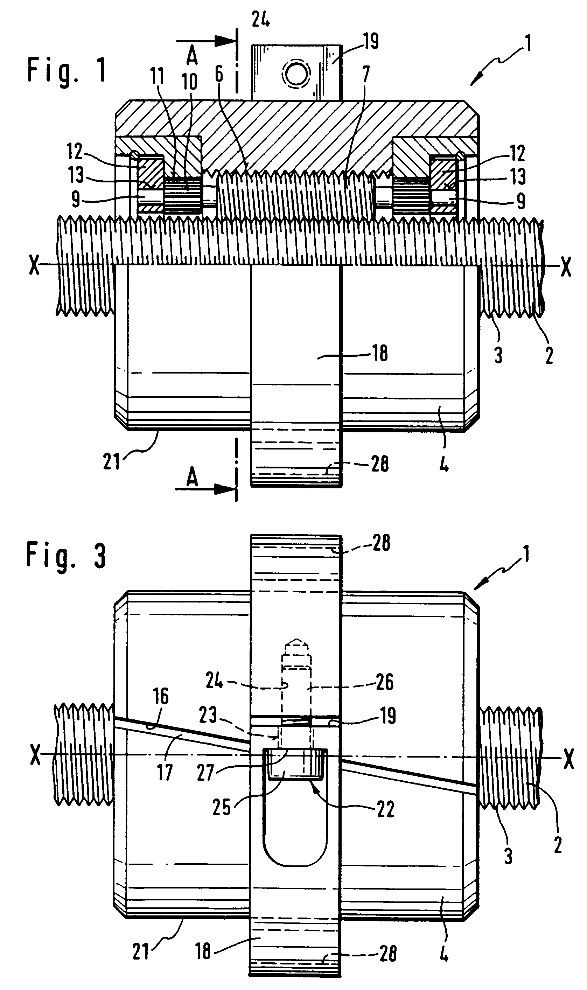

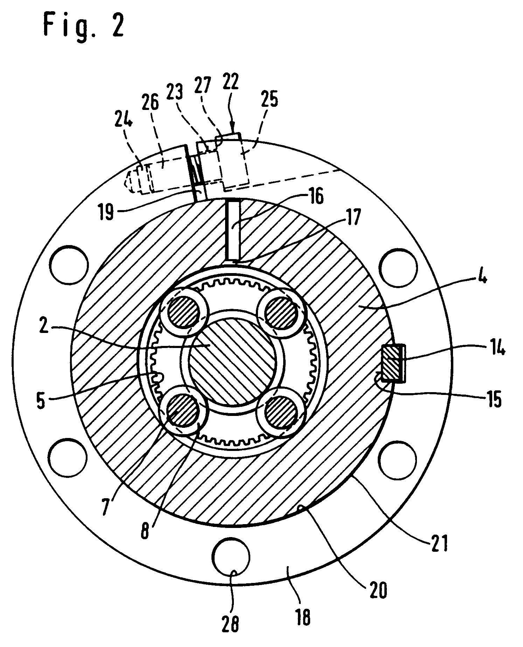

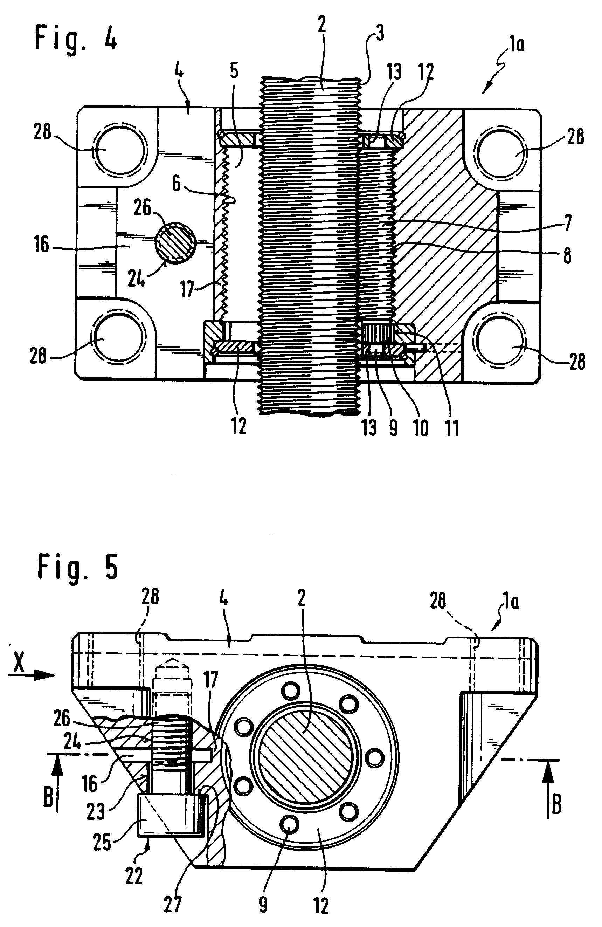

Die Rollengewindetriebe 1 nach den Figuren 1 bis 3 bzw. la nach den Figuren 4 bis 6 sind vom Prinzip her gleich aufgebaut. Bei beiden ist eine Gewindespindel 2 vorgesehen, die mit einem mehrgängigen Gewinde 3 ausgestattet ist. Die Drehachse ist mit X-X bezeichnet. Auf die Gewindespindel 2 ist der Mutternkörper 4 aufgeschraubt und entlang der angetriebenen Gewindespindel 2 verstellbar.

Der Mutternkörper 4 ist mit einer Gewindebohrung 5 versehen, dessen Gewinde entspricht nach Steigungsrichtung und Steigungsgröße dem Gewinde 3 der Gewindespindel 2. Der Durchmesser der Gewindebohrung 5 ist jedoch erheblich größer als der Außendurchmesser der Gewindespindel 2. Zwischen der Gewindelspindel 2 und der Wandung 6 der Gewindebohrung 5 sind umfangsverteilt Gewinderollen 7 angeordnet. Die Gewinderollen 7 sind in ihrem mittleren Abschnitt mit Gewinde versehen. Dieses entspricht den Gewinden 3 der Gewindespindel 2 und dem der Gewindebohrung 5 des Mutternkörpers 4. Die Gewinderollen 7 sind mit ihrem Gewinde 8 sowohl radial innen mit dem Gewinde 3 der Gewindespindel 2 als auch radial außen mit der Gewindebohrung 5 des Mutternkörpers 4 in Eingriff. Die Gewinderollen 7 sind umfangsverteilt angeordnet. Hierzu sind sie mit Zapfen 9 in entsprechend umfangsverteilten Führungsbohrungen 13 von endseitig an ihnen angebrachten Führungsscheiben 12 gelagert. Die Führungsscheiben 12 sind gegenüber dem Mutternkörper 4 axial gesichert, aber drehbar gehalten. Ferner weist der Mutternkörper 4 verzahnte Ringabschnitte 11 auf, mit denen die an den Enden der Gewinderollen 7 angebrachten Zahnabschnitte 10 kämmen.

Hierdurch sind die Gewinderollen 7 einander gegenüber und auch gegenüber dem Gewinde 3 der Gewindespindel 2 als auch dem Gewinde der Gewindebohrung 5 des Mutternkörpers 4 gegenüber synchronisiert. Die axiale Sicherung der Führungsscheiben 12 erfolgt durch Sicherungsringe.

Bei der Ausbildung nach den Figuren 1 bis 3 ist der zylindrische Mutternkörper 4 ausgehend von seiner Außenfläche 21 mit einer Ausnehmung 16 versehen, die sich radial über den wesentlichen Teil seiner Wandstärke erstreckt, jedoch einen Steg 17 benachbart zur Gewindebohrung 5 beläßt. Der Steg 17 hat eine Höhe von etwa 0,5 mm bis 2 mm. Die Breite der Ausnehmung 16 liegt bevorzugt in einer Größenordnung von 0,5 mm bis 3 mm. Die Ausnehmung 16 erstreckt sich über die gesamte Länge des Mutternkörpers 4, insbesondere jedoch über die Länge des Bereiches der mit Gewinde versehen ist, also über die Länge der Gewindebohrung 5. Die Ausnehmung 16 verläuft schräg zur Achse X-X. Der Schrägungswinkel kann zwischen 3° und 20° liegen. Bevorzugt ist er mit 10° bemessen. Bei der Ausführungsform nach den Figuren 1 bis 3 ist der Mutternkörper 4 mit seiner zylindrischen Außenfläche 21 in der Bohrung 20 eines geschlitzten Spannringes 18 aufgenommen. Der Schlitz 19 des Spannringes 18 verläuft parallel zur Achse X-X. Quer zum Verlauf des Schlitzes 19 ist eine Spannschraube 22 angeordnet. Diese greift in eine Gewindebohrung 24 auf der einen Seite des Schlitzes 19 ein. Sie ist mit ihrem Gewindeschaft 26 durch die Durchgangsbohrung 23 in dem gegenüberliegenden Abschnitt des Spannringes 18 hindurchgeführt. Der Schraubenkopf 25 legt sich beim Festziehen an die Widerlagerfläche 27 zum Verspannen an. Aufgrund der hohen Steifigkeit der Baueinheit bzw. des Steges 17 sind hohe Verspannkräfte und damit hohe Anzugsmomente für die Spannschraube 22 erforderlich, um eine genügende Durchmesserreduzierung zu erreichen. Die hohe Vorspannung bewirkt jedoch auch, daß kein Nachsetzen und damit auch kein Lösen der Verbindung und damit Veränderung der Spieleinstellung möglich ist.

Der Mutternkörper 4 ist über einen in eine Nut 15 eingelegten Keil 14 drehfest in der Bohrung 20 des Spannringes 18 aufgenommen, der zur Befestigung an einem zu bewegenden Maschinenteil dient. Es kann jedoch der Spannring 18 mit Befestigungsbohrungen 28 versehen sein, so daß er als integrierter Flansch zum Anbringen des Mutternkörpers 4 an einem zu bewegenden Maschinenteil genutzt werden kann. Dabei ist der Flansch als integrierter Bestandteil des Mutternkörpers 4 auszubilden, so daß Schubkräfte aufgenommen werden können.

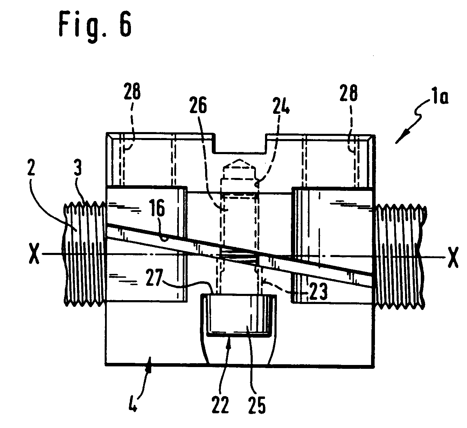

Beim Ausführungsbeispiel nach den Figuren 4 bis 6 besteht zu den Figuren 1 bis 3 der Unterschied lediglich darin, daß auf einen Spannring verzichtet ist. Der Mutternkörper 4 ist selbst zur Befestigung an einem Maschinenteil, das zu bewegen ist, ausgestaltet. Hierzu weist er eine Anlagefläche und Bohrungen 28 für Befestigungsschrauben auf. Der Mutternkörper 4 weist selbst die Spannschraube 22 auf, die in eine Gewindebohrung 24 auf der einen Seite der Ausnehmung 16 einschraubbar ist. Auf dem gegenüberliegenden Abschnitt des Mutternkörpers 4 ist die Durchgangsbohrung 23 vorhanden, die von dem Gewindeschaft 26 der Spannschraube 22 durchgriffen wird. An diesem Abschnitt ist ebenfalls die Widerlagerfläche 27 angebracht, an die sich der Kopf 25 der Spannschraube 22 anlegt. Die Ausnehmung 16 geht ebenfalls von der Außenfläche des Mutternkörpers 4 aus und verläuft ebenfalls, wie aus Figur 6 erkennbar ist, schräg zur Achse X-X. Die Durchmesserreduzierung der Gewindebohrung 5 und damit die Veränderung der radialen Spielverhältnisse zwischen Mutternkörper 4, den Gewinderollen 7 und der Gewindespindel 2 führt zur Einstellbarkeit der gewünschten Verhältnisse.

### Bezugszahlenliste

- 1, 1a: Rollengewindetrieb
- 2: Gewindespindel
- 3: Gewinde der Gewindespindel
- 4: Mutternkörper
- 5: Gewindebohrung
- 6: Wandung der Gewindebohrung
- 7: Gewinderollen
- 8: Gewinde der Gewinderollen
- 9: Zapfen der Gewinderollen
- 10: Zahnabschnitt
- 11: verzahnter Ringabschnitt des Mutternkörpers
- 12: Führungsscheibe
- 13: Führungsbohrung
- 14: Keil
- 15: Nut
- 16: Ausnehmung
- 17: Steg
- 18: Spannring
- 19: Schlitz des Spannringes
- 20: Bohrung im Spannring
- 21: Außenfläche des Mutternkörpers
- 22: Spannschraube
- 23: Durchgangsbohrung
- 24: Gewindebohrung
- 25: Schraubenkopf
- 26: Gewindeschaft
- 27: Widerlagerfläche
- 28: Bohrungen des Spannringes
- X-X: Achse

## Patentansprüche

1. Rollengewindetrieb (1, 1a) mit einer auf ihrer Außenfläche mit Gewinde versehen Gewindespindel (2) und einem Mutternkörper (4), der eine Gewindebohrung (5) aufweist, deren Gewinde gleichgerichtet zum und mit gleicher Steigung wie das Gewinde der Gewindespindel (2) verläuft, aber im Durchmesser größer bemessen ist und mit mehreren umfangsverteilt zwischen der Gewindespindel (2) und dem Mutternkörper (4) angeordneten Gewinderollen (7), deren Gewinde (8) sowohl mit dem der Gewindespindel (2) als auch dem des Mutternkörpers (4) in Eingriff ist und wobei die Gewinderollen (7) einander gegenüber auf Umfangsabstand synchronisiert rotierend, aber axial fest gegenüber dem Mutternkörper (4) gehalten sind, **dadurch gekennzeichnet,** daß der Mutternkörper (4) über die Länge der Gewindebohrung (5) entlang wenigstens einer Linie, welche schräg zur Achse (X-X) der Gewindebohrung (5) verläuft, in seinem Wandungsquerschnitt bis auf einen Steg (17) geschwächt oder geschlitzt ist und daß eine auf den Mutternkörper (4) im Sinne der Durchmesserreduzierung der Gewindebohrung (5) einwirkende Spannvorrichtung (18, 22) vorhanden ist.

2. Rollengewindetrieb nach Anspruch 1, **dadurch gekennzeichnet,** daß zur Querschnittsschwächung eine Ausnehmung (16) vorhanden ist, die von der Außenfläche des Mutternkörpers (4) ausgeht und bis an den benachbart zur Wandung (6) der Gewindebohrung (5) angeordneten Steg (17) heranreicht.

3. Rollengewindetrieb nach Anspruch 1, **dadurch gekennzeichnet,** daß der Steg (17) zur Außenfläche des Mutternkörpers (4) hin angeordnet ist und die der Querschnittsschwächung dienende Ausnehmung von der Gewindebohrung (5) des Mutternkörpers (4) ausgeht.

4. Rollengewindetrieb nach Anspruch 1, **dadurch gekennzeichnet,** daß der Steg (17) im Bereich zwischen der Bohrungswandung (6) der Gewindebohrung (5) und der Außenfläche des Mutternkörpers (4) angeordnet ist und zur Querschnittsschwächung jeweils eine Ausnehmung von der Gewindebohrung (5) und der Außenfläche des Mutternkörpers (4) ausgehen.

5. Rollengewindetrieb nach einem der Ansprüche 2 bis 4, **dadurch gekennzeichnet,** daß die Stärke des Steges (17) zwischen 0,5 mm und 2 mm beträgt.

6. Rollengewindetrieb nach einem oder mehreren der Ansprüche 1 bis 5, **dadurch gekennzeichnet,** daß der Mutternkörper (4) eine zylindrische Außenfläche (21) besitzt und in der Bohrung (20) eines im Durchmesser reduzierbaren, geschlitzten Spannringes (18) als Spannvorrichtung aufgenommen ist.

7. Rollengewindetrieb nach Anspruch 6, **dadurch gekennzeichnet,** daß der Spannring (18) zur Durchmesserreduzierung eine oder mehrere Spannschrauben (22) aufweist, welche querverlaufend zu seinem Schlitzkörper angeordnet sind.

8. Rollengewindetrieb nach einem oder mehreren der Ansprüche 1 bis 5, **dadurch gekennzeichnet,** daß die Spannvorrichtung Bestandteil des Mutternkörpers (4) ist und der Mutternkörper (4) in seinen an die Ausnehmung (16) bzw. den Schlitz beidseitig angrenzenden Abschnitten mit einer Gewindebohrung (24) und einer Widerlagerfläche (27) für eine Spannschraube (22) versehen ist.

## Claims

1. Roller screw drive (1, 1a) comprising a threaded spindle (2) with a screw thread on its outer surface, and a nut member (4) having a threaded bore (5) whose screw thread has the same orientation and pitch as the screw thread of the threaded spindle (2) but a larger diameter, a plurality of threaded rollers (7) being distributed over the periphery between the threaded spindle (2) and the nut member (4) and whose screw thread (8) is engaged both with the screw thread of the threaded spindle (2) and the screw thread of the nut member (4), the threaded rollers (7) rotating in synchronization with one another while being retained peripherally spaced and axially fixed with regard to the nut member (4), characterized in that the wall cross-section of the nut member (4) is reduced or slit down to a web (17) over the length of the threaded bore (5) along at least one line extending at a slant to the axis (X-X) of the threaded bore (5), and there is provided a tensioning device (18, 22) which acts on the nut member (4) in the direction of reducing the diameter of the threaded bore (5).

2. Roller screw drive according to claim 1, characterized in that the cross-section reduction is obtained by means of a recess (16) starting from the outer surface of the nut member (4) and extending upto the web (17) which is arranged adjacent to the wall (6) of the threaded bore (5).

3. Roller screw drive according to claim 1, characterized in that the web (17) is arranged nearer the outer surface of the nut member (4), and the recesss assuring the cross-section reduction starts from the threaded bore (5) of the nut member (4).

4. Roller screw drive according to claim 1, characterized in that the web (17) is arranged in the region between the bore wall (6) of the threaded bore (5) and the outer surface of the nut member (4), and the cross-section reduction is assured by one recess starting from the threaded bore (5) and another recess starting from the outer surface of the nut member (4).

5. Roller screw drive according to one of the claims 2 to 4, characterized in that the thickness of the web (17) lies between 0.5 mm and 2 mm.

6. Roller screw drive according to one or more of the claims 1 to 5, characterized in that the nut member (4) has a cylindrical outer surface (21) and is lodged in the bore (20) of a slit tension ring (18) capable of being reduced in diameter and acting as a tensioning device.

7. Roller screw drive according to claim 6, characterized in that, for the reduction of its diameter, the tension ring (18) comprises one or more tension screws (22) arranged crosswise to its slit.

8. Roller screw drive according to one or more of the claims 1 to 5, characterized in that the tensioning device forms a part of the nut member (4), and the two portions of the nut member (4) adjacent to the recess (16) or the slit on each side, comprise a threaded bore (24) and an abutment surface (27) respectively for a tension screw (22).

## Revendications

1. Entraînement (1, 1a) à galets filetés comprenant une broche filetée (2) et un corps écrou (4) muni d'un alésage taraudé (5) dont le taraudage a la même orientation et le même pas que le filetage de la broche filetée (2) mais un diamêtre supérieur, ledit entraînement (1, 1a) comprenant, en plus, plusieurs galets filetés (7) qui sont agencés entre la broche filetée (2) et le corps écrou (4) en étant répartis en direction périphérique et dont le filetage (8) est en prise tant avec le filetage de la broche filetée (2) qu'avec le taraudage du corps écrou (4), les galets filetés (7) tournant de manière synchronisée, l'un par rapport à l'autre, à distance périphérique tout en étant retenus axialement fixes par rapport au corps écrou (4), caractérisé en ce que, sur la longueur de l'alésage taraudé (5), la section droite de la paroi du corps écrou (4) est réduite ou fendue de telle façon le long d'au moins une ligne qui est inclinée par rapport à l'axe (X-X) de l'alésage taraudé (5) qu'il ne reste qu'une entretoise (17), et en ce qu'il est prévu un dispositif de tensionnement (18, 22) qui agit sur le corps écrou (4) dans la direction de réduction du diamètre de l'alésage taraudé 5.

2. Entraînement à galets filetés selon la revendication 1, caractérisé en ce que la réduction de la section droite est assurée par un évidement (16) s'étendant à partir de la surface externe du corps écrou (4) jusqu'à l'entretoise (17) qui est agencée voisine de la paroi (6) de l'alésage taraudé (5).

3. Entraînement à galets filetés selon la revendication 1, caractérise en ce l'entretoise (17) est agencée voisine de la surface externe du corps écrou (4), et l'évidement servant à la réduction de la section droite s'étend à partir de l'alésage taraudé (5) du corps écrou (4).

4. Entraînement à galets filetés selon la revendication 1, caractérisé en ce que l'entretoise (17) est agencée dans la région comprise entre la paroi (6) de l'alésage taraudé (5) et la surface externe du corps écrou (4), et en ce que, pour la réduction de la section droite, un évidement s'étend à partir de l'alésage taraudé (5) et un autre évidement s'étend à partir de la surface externe du corps écrou (4).

5. Entraînement à galets filetés selon l'une des revendications 2 à 4, caractérisé en ce que l'épaisseur de l'entretoise (17) est comprise entre 0,5 et 2 mm.

6. Entraînement à galets filetés selon une ou plusieurs des revendications 1 à 5, caractérisé en ce que le corps écrou (4) possède une surface externe cylindrique (21) et est logé dans l'alésage (20) d'un anneau tendeur fendu (18) dont le diamètre peut être réduit et qui sert de dispositif de tensionnement.

7. Entraînement à galets filetés selon la revendication 6, caractérisé en ce que, pour la réduction de son diamètre, l'anneau tendeur (18) comprend une ou plusieurs vis de tension (22) qui sont agencées en travers de sa fente.

8. Entraînement à galets filetés selon une ou plusieurs des revendications 1 à 5, caractérisé en ce que le dispositif de tensionnement fait partie du corps écrou (4), et les deux portions du corps écrou (4) voisines de part et d'autre de l'évidement (16), ou de la fente, suivant le cas, sont munies, l'une, d'un alésage taraudé (24), et l'autre, d'une surface de butée (27) pour une vis de tension (22).
